# EUROPEAN PATENT SPECIFICATION

(11) **EP 4 229 461 B1**
(45) Date of publication and mention of the grant of the patent: **03.12.2025**
(21) Application number: 20833764.2
(22) Date of filing: 15.12.2020
(51) Int. Cl.: G02B 15/10, G03B 17/56, G02B 17/02, G02B 23/06, G02B 13/00, H04M 1/02, H04M 1/21, G03B 17/17

(54) **OPTICAL MAGNIFICATION DEVICE FOR ELECTRONIC APPARATUS**
OPTISCHE VERGRÖSSERUNGSVORRICHTUNG FÜR EIN ELEKTRONISCHES GERÄT
DISPOSITIF DE GROSSISSEMENT OPTIQUE POUR APPAREIL ÉLECTRONIQUE

(43) Date of publication of application: 23.08.2023
(73) Proprietor: Huawei Technologies Co., Ltd., Shenzhen, Guangdong 518129 (CN)
(72) Inventor: EROMAKI, Marko, 16440 Kista (SE)
(74) Representative: Isarpatent
(86) International application number: PCT/EP2020/086173
(87) International publication number: WO 2022/128071

(56) References cited:
- WO-A1-2013/133053
- WO-A1-2020/011349
- US-B1- 9 060 108

## Description

### TECHNICAL FIELD

The disclosure relates to an optical magnification device for an electronic apparatus, the device comprising a folding structure configured to form a folded optical path.

### BACKGROUND

Smartphone-based zooming or static telescope accessories have been developed for observing the sky, space, and planets. Current solutions are usually based on the principle of guiding incoming light using several refractive elements such as plastic or glass lenses.

The magnification factor in a telescope needs to be relatively large, preferably at least x100 in order to properly be able to observe, e.g., the moon which is located some 380 000 km away With a magnification factor of x100, it is possible to see the outlines of a moon crater. However, current solutions for use with smartphones can usually only achieve a magnification factor of x50. Furthermore, these solutions are complex, expensive, and relatively large, and oftentimes require additional support.

Professional telescope devices oftentimes comprise reflection-based optics instead of refraction-based optics. However, such optics are currently too large, static, and expensive to be used as a smartphone accessory.

WO 2020/011349 A1 relates to a detachable optical structure for displacing the optical axis of a camera device. WO 2013/133053 A1 relates to a teleconverter lens and imaging optical system.

US 9 060 108 B1 D3 relates to an apparatus and method for redirecting light to provide for reorientation of a camera.

### SUMMARY

The invention is defined by the claims.

It is an object of the present invention to provide an improved optical magnification device and an electronic apparatus with such an optical magnification device. The foregoing and other objects are achieved by the features of the independent claim. Further implementation forms are apparent from the dependent claims, the description, and the figures. This object is solved by the attached independent claims and further embodiments and improvements of the invention are listed in the attached dependent claims. Hereinafter, up to the "brief description of the drawings", expressions like "... aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect according to the invention, there is provided an optical magnification device for an electronic apparatus, the device comprising a folding structure comprising a reflection system configured to form a folded optical path and a support structure configured to attach the folding structure to the electronic apparatus, such that a focal plane of the optical magnification device is located within the electronic apparatus. The reflection system comprises a primary reflective element and a secondary reflective element, the primary reflective element comprising a concave reflective surface and the secondary reflective element comprising a planar reflective surface.

Such a solution allows for an optical magnification accessory that is sufficiently small, dynamic, and inexpensive to be used with an electronic apparatus such as a smartphone. Furthermore, the solution does not require additional supporting elements. The device is robust and relatively simple to manufacture due, in part, to the change from refractive elements to reflective elements. The device provides sufficient optical magnification, up to over x100, which corresponds to a magnification factor which today is achieved in professional telescopes.

In a possible embodiment of the first aspect, the folding structure further comprises a real or virtual aperture, electromagnetic radiation entering the folding structure via the aperture, and the reflection system being configured to form the folded optical path as it extends from the aperture to the focal plane.

In a further possible embodiment of the first aspect, the secondary reflective element is arranged, along the optical path, between the aperture and the primary reflective element; or between the primary reflective element and the focal plane, allowing maximum configuration flexibility.

In a further possible embodiment of the first aspect, the reflection system further comprises a tertiary reflective element, the tertiary reflective element being arranged, along the optical path, between the primary reflective element and the focal plane, or between the aperture and the primary reflective element, the tertiary reflective element comprising a planar reflective surface, allowing an even more flexible configuration in view of the optical path being increasingly foldable.

In a further possible embodiment of the first aspect, a total length of the optical path, as the optical path extends from the focal plane to the most distant of the primary reflective element, the secondary reflective element, and the tertiary reflective element, is ≥100 mm, preferably ≥300 mm, facilitating a sufficient magnification factor.

In a further possible embodiment of the first aspect, the primary reflective element, the secondary reflective element and/or the tertiary reflective element comprises a spherical or parabolic reflective surface.

In a further possible embodiment of the first aspect, the primary reflective element, the secondary reflective element and/or the tertiary reflective element comprises a prism or a mirror.

In a further possible embodiment of the first aspect, the secondary reflective element is configured to reflect incoming electromagnetic radiation towards the primary reflective element, the primary reflective element is configured to reflect the electromagnetic radiation towards the tertiary reflective element, the tertiary reflective element is configured to reflect the electromagnetic radiation towards the image sensor.

In a further possible embodiment of the first aspect, the secondary reflective element and/or the tertiary reflective element is configured to fold the optical path by 90°.

In a further possible embodiment of the first aspect, the primary reflective element is configured to fold the optical path by 170-190°, preferably 180°.

In a further possible embodiment of the first aspect, the reflection system is stationarily arranged within the folding structure, and the support structure encloses the folding structure, facilitating a reliable and robust optical magnification device.

In the first aspect, the reflection system is at least partially non-stationarily arranged within the folding structure, the support structure comprising at least one movable arm configured to carry one of the primary reflective element, the secondary reflective element, and the tertiary reflective element, the movable arm being movable between a storage position and an operational position. This allows for an optical magnification device that is dynamic, and which can have a focal length that extends far beyond the limitations provided by the outer dimensions of the optical magnification device and the electronic apparatus.

In the first aspect, the optical magnification device is operational in the operational position only, allowing the components of the optical magnification device to be in a protected position when out of use.

In the first aspect, the movable arm comprises a first end pivotally connected to a base of the support structure, and a second end carrying one of the primary reflective element, the secondary reflective element, and the tertiary reflective element, the movable arm being configured to pivot towards a main plane of the base and, optionally, an additional movable arm. This allows for a simple and reliable solution for extending the focal length of the optical magnification device.

In a further possible embodiment of the first aspect, the movable arm comprises a plurality of interconnected segments, the segments being movable with regards to each other such that the movable arm is extendable in at least one direction, facilitating an even larger extension of the focal length of the optical magnification device.

In a further possible embodiment of the first aspect, the segments are slidably and/or pivotally interconnected.

In a further possible embodiment of the first aspect, the support structure comprises a first movable arm and a second movable arm, the first movable arm carrying the primary reflective element and the second movable arm carrying the secondary reflective element, the primary reflective element and the secondary reflective element being arranged such that the reflective surface of the primary reflective element at least partially faces the reflective surface of the primary reflective element when the first movable arm and the second movable arm are in operational positions.

In a further possible embodiment of the first aspect, the first movable arm and the second movable arm are configured to fold over each other when the first movable arm and the second movable arm are moved from the operational position to the storage position.

In a further possible embodiment of the first aspect, the peripheral, i.e. outer, dimensions of the optical magnification device remain unchanged regardless of the movable arm being in the storage position or the operational position, such that the electronic apparatus maintains its size even when the optical magnification device is being used.

In a further possible embodiment of the first aspect, the peripheral dimensions of the optical magnification device are larger when the movable arm(s) is/are in the operational position than when in the storage position, facilitating a maximal optical magnification factor.

In a further possible embodiment of the first aspect, the distance between the primary reflective element and the secondary reflective element is up to 450 mm.

In a further possible embodiment of the first aspect, the magnification provided by the optical magnification device is at least x100.

In a further possible embodiment of the first aspect, the further comprises a lens arrangement arranged adjacent one of the secondary reflective element and the tertiary reflective element, facilitating a distortion-free transition between optical systems.

In a further possible embodiment of the first aspect, the lens arrangement comprises at least one lens, allowing the lens arrangement to be configured according to a specific need.

According to a second aspect according to the invention, there is provided an electronic apparatus comprising a display, a housing, a primary image sensor, and the optical magnification device according to the above, wherein the optical magnification device is configured to attach to the housing such that a focal plane of the optical magnification device is coplanar with the primary image sensor.

This facilitates an electronic apparatus, such as a smartphone, which can be used as a portable telescope. The optical magnification device is sufficiently small, dynamic, and inexpensive to be used with a smartphone. The device may provide optical magnification of at least x100, corresponding to a magnification factor which today is achieved in professional telescopes.

In a possible embodiment of the second aspect, the support structure of the optical magnification device comprises protrusions configured to engage a circumference of the housing. This allows for an easily attachable and detachable device that does not move during use.

In a further possible embodiment of the second aspect, one of the secondary reflective element, the tertiary reflective element, and the lens arrangement of the optical magnification device is arranged adjacent the primary image sensor, allowing maximum flexibility and adaptability to a specific situation or apparatus configuration.

In a further possible embodiment of the second aspect, a distance between the primary image sensor and the closest one of the secondary reflective element, the tertiary reflective element, and the lens arrangement, along the optical path, is no more than 2 mm, keeping the combined thickness of the optical magnification device and electronic apparatus as small as possible.

In a further possible embodiment of the second aspect, a section of the optical path which reaches the focal plane is colinear with an optical axis of the primary image sensor.

In a further possible embodiment of the second aspect, an optical axis of the lens arrangement is colinear with the optical axis of the primary image sensor, facilitating a distortion-free transition between optical systems.

In a further possible embodiment of the second aspect, the electronic apparatus comprises a secondary image sensor having a wider field of view than the primary image sensor, the optical magnification device being arranged such that it does not obscure an optical axis of the secondary image sensor, and the display being a dual-view display configured to show, optionally simultaneously, a primary view provided by the primary image sensor and a secondary view provided by the secondary image sensor. This allows any additional image sensors to be used for other functions of the electronic apparatus.

In a further possible embodiment of the second aspect, the secondary view is used for aiming the optical magnification device in the desired direction.

In a further possible embodiment of the second aspect, the reflection system of the optical magnification device utilizes, at least partially, a lateral width of the housing to accommodate the optical path. This allows the optical path to be as long as possible without affecting any of the outer dimensions of the electronic apparatus.

This and other aspects will be apparent from and the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 shows perspective front and rear views of an optical magnification device in accordance with one embodiment of the present invention,
Fig. 2 shows perspective front and rear views of an electronic apparatus and the optical magnification device shown in Fig. 1;
Fig. 3 shows a perspective view of an electronic apparatus and an optical magnification device in accordance with one embodiment of the present invention,
Fig. 4 shows a partial cross-sectional view of an optical magnification device in accordance with an example not according to the claimed subject-matter,
Fig. 5 shows a partial cross-sectional view of an optical magnification device in accordance with one embodiment of the present invention,
Figs. 6a to 6c show schematic side views of an optical magnification device in accordance with one embodiment of the present invention, wherein the optical magnification device is in an open operational position, an intermediate semi-folded position, and a folded storage position;
Fig. 7 shows a perspective view of an electronic apparatus and an optical magnification device in accordance with one embodiment of the present invention, wherein the optical magnification device is in a folded storage position;
Fig. 8 shows a schematic side view of an optical magnification device in accordance with one embodiment of the present invention, wherein the optical magnification device is in a folded storage position;
Fig. 9 shows a schematic side view of an electronic apparatus and an optical magnification device in accordance with one embodiment of the present invention, wherein the optical magnification device is in a folded storage position;
Fig. 10 shows a perspective view of an optical magnification device in accordance with one embodiment of the present invention, wherein the optical magnification device is in an open operational position;
Figs. 11a to 11c show schematic side views of an electronic apparatus and an optical magnification device in accordance with one embodiment of the present invention, wherein the optical magnification device is in a folded storage position, an intermediate semi-folded position, and an open operational position;
Fig. 12 shows a perspective view of an electronic apparatus and an optical magnification device in accordance with one embodiment of the present invention, wherein the optical magnification device is in an open operational position;
Fig. 13 shows a schematic side view of an optical magnification device in accordance with one embodiment of the present invention, wherein the optical magnification device is in an open operational position;
Fig. 14 shows a schematic side view of an arm of an optical magnification device in accordance with one embodiment of the present invention.

In the following description, features which in the above summary of the invention have been marked as "not claimed" are also hereinafter, when they are described and explained with reference to the drawings, to be understood as "not claimed" or "not part of the invention"

### DETAILED DESCRIPTION

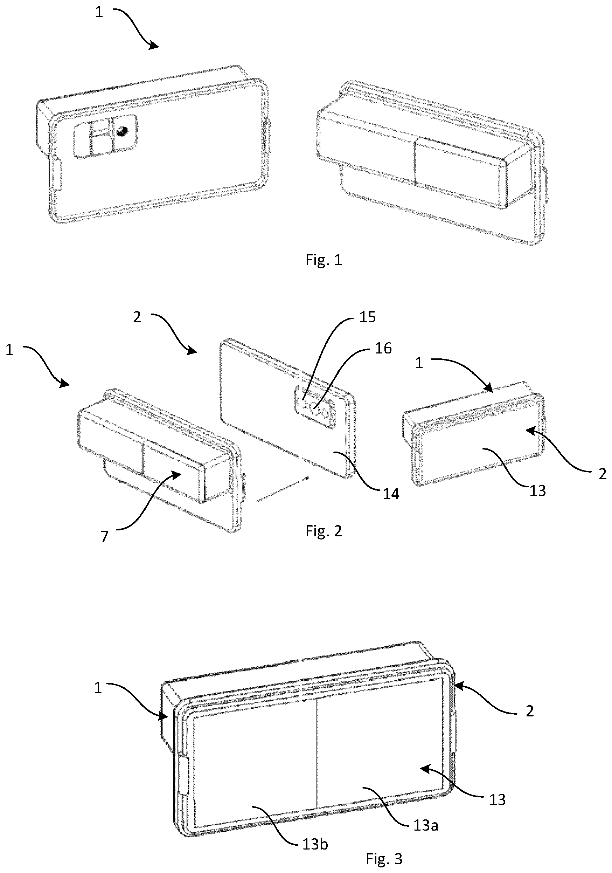

Fig. 1 shows an optical magnification device 1 for an electronic apparatus 2, such as that illustrated in Fig. 2. The electronic apparatus 2 may be a tablet or a smartphone, or any other portable electronic apparatus.

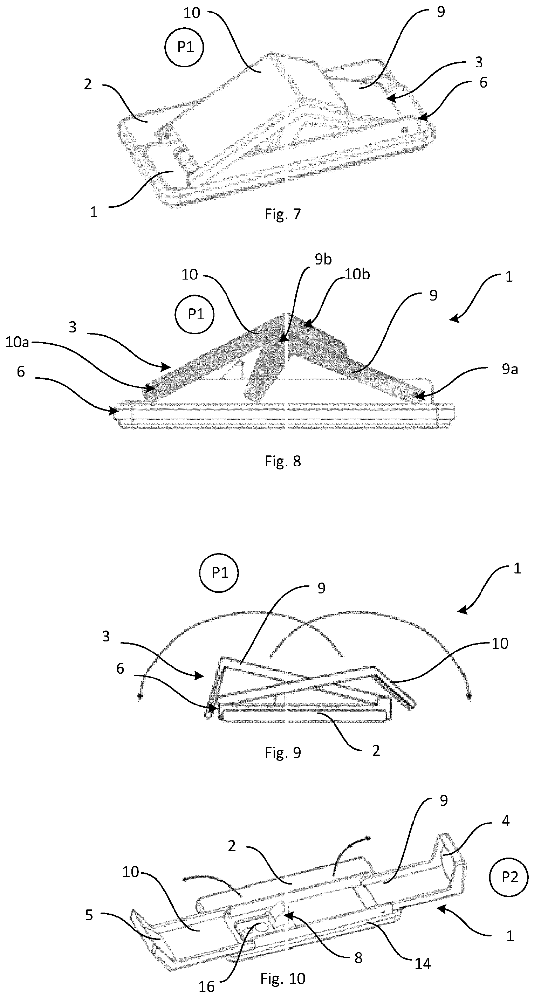

The optical magnification device comprises a folding structure 3 and a support structure 6 configured to attach the folding structure 3 to the electronic apparatus 2, as shown in Figs. 7, 9, 10, 11 and 12. The folding structure 3 is attached to the electronic apparatus 2 such that the focal plane of the optical magnification device 1 is located within the electronic apparatus 2.

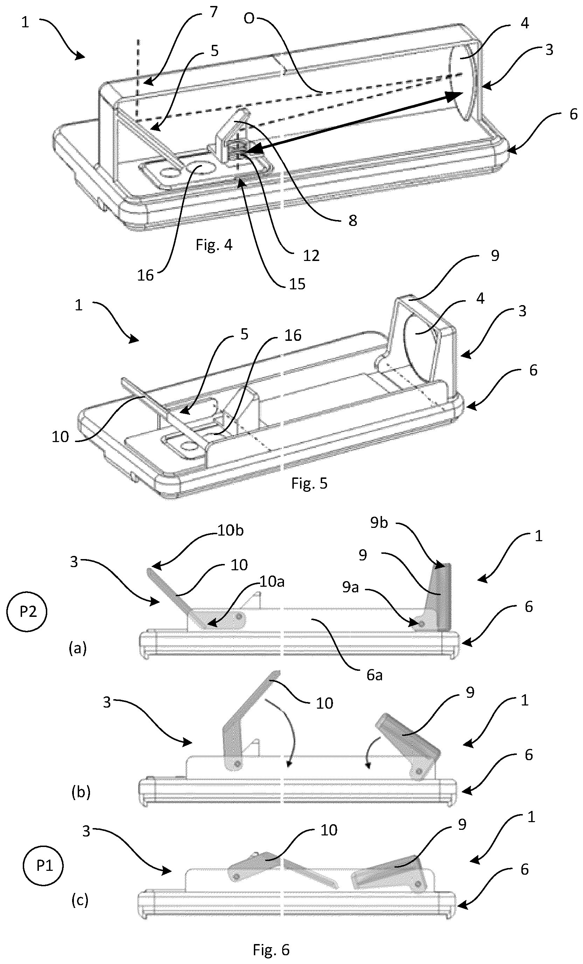

The support structure 6 may be a frame structure such a surrounding frame with an open configuration allowing the user access to the folding structure 3 as e.g. suggested in Figs. 6a to 6c. The support structure 6 may be a housing structure with a closed open configuration which does not allow the user access to the folding structure 3 as suggested in Figs. 1 to 4.

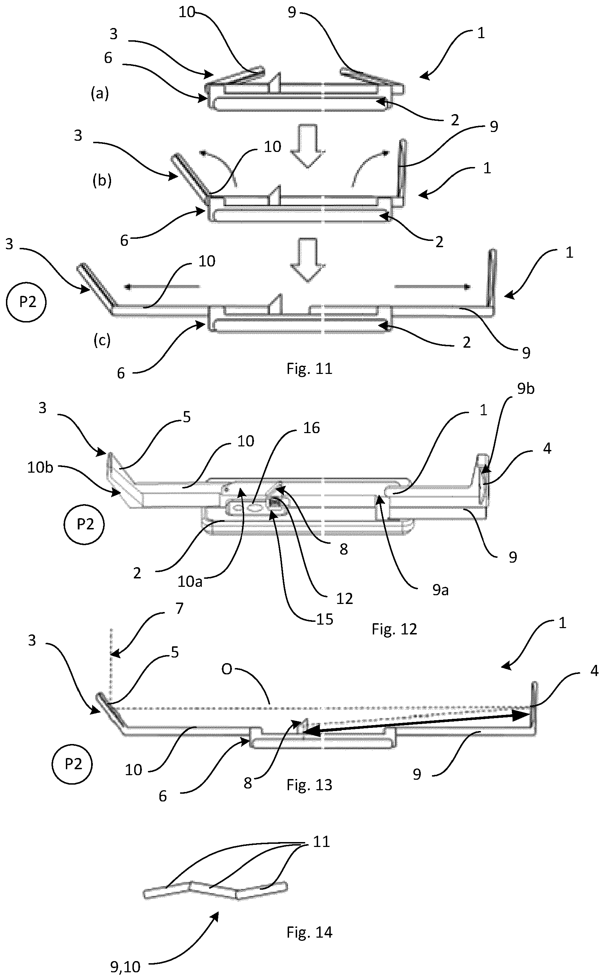

The folding structure 3 comprises a reflection system configured to form a folded optical path O as shown in Figs. 4 and 13, the optical path O being illustrated by a dashed line.

The folding structure 3 may further comprise a real or virtual aperture 7, electromagnetic radiation entering the folding structure 3 via the aperture 7 and the reflection system being configured to form the folded optical path O as it extends from the aperture 7 to the focal plane of the optical magnification device 1.

The reflection system comprises at least a primary reflective element 4 and a secondary reflective element 5. The secondary reflective element 5 may be arranged, along the optical path O, between the aperture 7 and the primary reflective element 4, as shown in Figs. 4 and 5. The secondary reflective element 5 may also be arranged, along the optical path O, between the primary reflective element 4 and the focal plane (not shown).

The reflection system may further comprise a tertiary reflective element 8, the tertiary reflective element 8 being arranged, along the optical path O, between the primary reflective element 4 and the focal plane, as shown in Figs. 4 and 5, or between the aperture 7 and the primary reflective element 4 (not shown).

The secondary reflective element 5 may be configured to reflect incoming electromagnetic radiation towards the primary reflective element 4, the primary reflective element 4 configured to reflect the electromagnetic radiation towards the tertiary reflective element 8, and the tertiary reflective element 8 configured to reflect the electromagnetic radiation towards an image sensor of the electronic apparatus 2, as suggested in Figs. 4. and 13.

The secondary reflective element 5 and/or the tertiary reflective element 8 may be configured to fold the optical path O by 90°, as shown in Figs. 4 and 13. The primary reflective element 4 may be configured to fold the optical path O in any direction, preferably by 170-190°, even more preferably by 180° as shown in Fig. 13.

The total length of the optical path O, as the optical path O extends from the focal plane to the most distant one of the primary reflective element 4, the secondary reflective element 5, and the tertiary reflective element 8, is ≥100 mm, preferably ≥300 mm. By "most distant" is meant the reflective element which is the farthest away from the focal plane when travelling along the optical path, from the exterior and through the reflection system to the focal plane. Due to the folded nature of the optical path, the primary reflective element 4 may be the farthest away from the focal plane, when the shortest linear and direct distance is measured, as illustrated by the double-arrow in Figs. 4 and 13. However, the secondary reflective element 5 may at the same time be arranged the farthest away from the focal plane, when measuring the distance along the folded optical path.

The distance between the primary reflective element 4 and the secondary reflective element 5 may be up to 450 mm.

The magnification provided by the optical magnification device 1, i.e. the magnification factor, may be at least x20, under some conditions as much as at least x100. Nevertheless, the magnification factor depends on the length of the optical path from the focal plane to the last reflective element, i.e., the reflective element which is furthest away from the focal plane along the optical path. The length of the optical path is also known as the focal length.

The primary reflective element 4 comprises a concave reflective surface, and the secondary reflective element 5 comprises a planar reflective surface. The tertiary reflective element 8 may comprise a planar reflective surface. The primary reflective element 4, the secondary reflective element 5 and/or the tertiary reflective element 8 may comprise a spherical or parabolic reflective surface. The primary reflective element 4, the secondary reflective element 5 and/or the tertiary reflective element 8 may comprises a prism (not shown) or a mirror as shown in Fig. 4.

As shown in Fig. 4, the reflection system may be stationarily arranged within the folding structure 3, and the support structure 6 may enclose the folding structure 3 as shown in Figs. 1 to 4. With such a stationary arrangement and an optical path length/focal length of about 100-150 mm, the magnification factor can be less than x50, for example x20 - x40.

As shown in Figs. 5 to 13, the reflection system is at least partially non-stationarily arranged within the folding structure 3. The support structure 6 comprises at least one movable arm 9, 10 configured to carry one of the primary reflective element 4, the secondary reflective element 5, and the tertiary reflective element 8. The movable arm 9, 10 is movable between a storage position P1 and an operational position P2. The optical magnification device 1 may be operational in the operational position P2 only.

With such a non-stationary arrangement and an optical path length/focal length of about 300-450 mm, the magnification factor can be more than x100.

As show in Fig. 14, the movable arm 9, 10 may comprise a plurality of interconnected segments 11, the segments 11 being movable with regards to each other such that the movable arm 9, 10 is extendable in at least one direction. The segments 11 may be slidably and/or pivotally interconnected.

The movable arm 9, 10 comprises a first end 9a, 10a pivotally connected to a base 6a of the support structure 6, and a second end 9b, 10b carrying one of the primary reflective element 4, the secondary reflective element 5, and the tertiary reflective element 8. The movable arm 9, 10 is configured to pivot towards a main plane of the base 6a and, optionally, towards an additional movable arm 9, 10.

The support structure 6 may comprise a first movable arm 9 and a second movable arm 10, the first movable arm 9 carrying the primary reflective element 4 and the second movable arm 10 carrying the secondary reflective element 5, as shown in Figs. 10 and 12. The primary reflective element 4 and the secondary reflective element 5 are arranged such that the reflective surface of the primary reflective element 4 at least partially faces the reflective surface of the primary reflective element 4 when the first movable arm 9 and the second movable arm 10 are in operational positions P2. The tertiary reflective element 8 may be stationary with regards to the movable primary reflective element 4 and secondary reflective element 5. The tertiary reflective element 8 may also be movable.

The first movable arm 9 and the second movable arm 10 may be configured to fold over each other when the first movable arm 9 and the second movable arm 10 are moved from the operational position P2 to the storage position P1, as shown in Figs 7, 8 and 9.

The peripheral dimensions, i.e. the width and height, of the optical magnification device 1 may remain unchanged regardless of whether the movable arm 9, 10 is in the storage position P1 or in the operational position P2, as shown in Figs 4 to 6. The peripheral dimensions of the optical magnification device 1 may also be larger when the movable arms 9, 10 is/are in the operational position P2 than when in the storage position P1, as shown in Figs. 10 to 13 which show an increased width.

The optical magnification device 1 may further comprise a lens arrangement 12 arranged adjacent, i.e. in direct abutment with or at a very short distance from, one of the secondary reflective element 5 (not shown) and the tertiary reflective element 8, shown in Figs. 4 and 12. The lens arrangement 12 may comprise at least one lens. The reflection system of the optical magnification device 1 does preferably not comprise any lenses or other refraction-based optics, i.e., there are no lenses arranged between the primary reflective element, the secondary reflective element 5, and/or the tertiary reflective element 8. Any lens arrangement 12 is arranged outside the reflection system.

The lens arrangement 12 may be fixed to the support structure 6 or detachable such that it can be removed when not needed, and/or the optical magnification device 1 may comprise several lens arrangements 12 which are interchangeable. Furthermore, the lens arrangement 12 may be stationary or moveable, e.g., along its optical axis.

The present invention further relates to an electronic apparatus 2 comprising a display 13, a housing 14, a primary image sensor 15, and the optical magnification device 1, as shown in Figs. 2 and 3. The optical magnification device 1 is configured to attach to the housing 14 such that the focal plane of the optical magnification device 1 is coplanar with the primary image sensor 15. The reflection system of the optical magnification device 1 may utilize, at least partially, the lateral width of the housing 14 to accommodate the optical path O, as shown in Figs. 4 and 13.

As shown in Figs. 4 to 6, the support structure 6 of the optical magnification device 1 may comprise protrusions configured to engage the circumference of the housing 14.

One of the secondary reflective element 5, the tertiary reflective element 8, and the lens arrangement 12 of the optical magnification device 1 are preferably arranged adjacent the primary image sensor 15, as shown in Fig 4. The distance between the primary image sensor 15 and the closest one of the secondary reflective element 5, the tertiary reflective element 8, and the lens arrangement 12, along the optical path O, is preferably no more than 2 mm.

The section of the optical path O which reaches the focal plane may be colinear with the optical axis of the primary image sensor 15. The optical axis of the lens arrangement 12 may be colinear with the optical axis of the primary image sensor 15.

The electronic apparatus 2 may further comprise a secondary image sensor 16, as shown in Figs. 2 and 5. The secondary image sensor 16 may have a wider field of view than the primary image sensor 15, and the optical magnification device 1 may be arranged such that it does not obscure the optical axis of the secondary image sensor 16. As shown in Fig. 3, display 13 may be a dual-view display configured to show, after individual selection or simultaneously, a primary view 13a provided by the primary image sensor 15 and a secondary view 13b provided by the secondary image sensor 16. The secondary view 13b may be used for aiming the optical magnification device 1 in the desired direction.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. An optical magnification device (1) for an electronic apparatus (2), said device comprising:
a folding structure (3) comprising a reflection system configured to from a folded optical path (O), said reflection system comprising a primary reflective element (4) and a secondary reflective element (5), said primary reflective element (4) comprising a concave reflective surface and said secondary reflective element (5) comprising a planar reflective surface; and
a support structure (6) configured to attach said folding structure (3) to said electronic apparatus (2), such that a focal plane of said optical magnification device (1) is located within said electronic apparatus (2),
wherein said reflection system is at least partially non-stationarily arranged within said folding structure (3), said support structure (6) comprising at least one first movable arm (9, 10) configured to carry one of said primary reflective element (4) or said secondary reflective element (5), said movable arm (9, 10) being movable between a storage position (P1) and an operational position (P2), and
wherein said movable arm (9, 10) comprises a first end (9a, 10a) pivotally connected to a base (6a) of said support structure (6), and a second end (9b, 10b) carrying one of said primary reflective element (4) or said secondary reflective element (5), said movable arm (9, 10) being configured to pivot towards a main plane of said base (6a) and, optionally, an additional movable arm (9, 10).

2. The device (1) according to claim 1, wherein said folding structure (3) further comprises a real or virtual aperture (7), electromagnetic radiation entering said folding structure (3) via said aperture, and said reflection system being configured to form said folded optical path (O) as it extends from said aperture (7) to said focal plane.

3. The device (1) according to claim 2, wherein said secondary reflective element (5) is arranged, along said optical path (O), between said aperture (7) and said primary reflective element (4); or
between said primary reflective element (4) and said focal plane.

4. The device (1) according to any one of the preceding claims, wherein said reflection system further comprises a tertiary reflective element (8),
said tertiary reflective element (8) being arranged, along said optical path (O), between said primary reflective element (4) and said focal plane; or
between said aperture (7) and said primary reflective element (4);
said tertiary reflective element (8) comprising a planar reflective.

5. The device (1) according to any one of the preceding claims, wherein a total length of said optical path, as said optical path extends from said focal plane to the most distant of said primary reflective element (4), said secondary reflective element (5), and said tertiary reflective element (8), is ≥100 mm, preferably ≥300 mm.

6. The device (1) according to any one of the preceding claims, wherein said reflection system is stationarily arranged within said folding structure (3), and said support structure (6) encloses said folding structure (3).

7. The device (1) according to claim 1, wherein said movable arm (9, 10) comprises a plurality of interconnected segments (11), said segments (11) being movable with regards to each other such that said movable arm (9, 10) is extendable in at least one direction.

8. The device (1) according to claim 7, wherein said segments (11) are slidably and/or pivotally interconnected.

9. The device (1) according to any one of claims 1 or 7 to 8, wherein said support structure (6) comprises a second movable arm (10), said first movable arm (9) carrying said primary reflective element (4) and said second movable arm (10) carrying said secondary reflective element (5), said primary reflective element (4) and said secondary reflective element (5) being arranged such that said reflective surface of said primary reflective element (4) at least partially faces said reflective surface of said primary reflective element (4) when said first movable arm (9) and said second movable arm (10) are in operational positions (P2).

10. The device (1) according to claim 9, wherein said first movable arm (9) and said second movable arm (10) are configured to fold over each other when said first movable arm (9) and said second movable arm (10) are moved from said operational position (P2) to said storage position (P 1).

11. The device (1) according to any one of the preceding claims, further comprising a lens arrangement (12) arranged adjacent one of said secondary reflective element (5) and said tertiary reflective element (8).

12. An electronic apparatus (2) comprising a display (13), a housing (14), a primary image sensor (15), and the optical magnification device (1) according to any one of claims 1 to 11, wherein said optical magnification device (1) is configured to attach to said housing (14) such that a focal plane of said optical magnification device (1) is coplanar with said primary image sensor (15).

13. The electronic apparatus (2) according to claim 12, wherein one of the secondary reflective element (5), the tertiary reflective element (8), and the lens arrangement (12) of said optical magnification device (1) is arranged adjacent said primary image sensor (15).

14. The electronic apparatus (2) according to claim 12 or 13, wherein a section of the optical path (O) which reaches said focal plane is colinear with an optical axis of said primary image sensor (15).

15. The electronic apparatus (2) according to any one of claims 12 to 14, comprising a secondary image sensor (16) having a wider field of view than said primary image sensor (15), said optical magnification device (1) being arranged such that it does not obscure an optical axis of said secondary image sensor (16), and said display (13) being a dual-view display configured to show, optionally simultaneously, a primary view (13a) provided by said primary image sensor (15) and a secondary view (13b) provided by said secondary image sensor (16).

## Patentansprüche

1. Optische Vergrößerungsvorrichtung (1) für ein elektronisches Gerät (2), die Vorrichtung Folgendes umfassend:
eine Faltstruktur (3), umfassend ein Reflexionssystem, das ausgelegt ist, um einen gefalteten optischen Weg (O) zu bilden, wobei das Reflexionssystem ein primäres reflektierendes Element (4) und ein sekundäres reflektierendes Element (5) umfasst, wobei das primäre reflektierende Element (4) eine konkave reflektierende Oberfläche umfasst und das sekundäre reflektierende Element (5) eine planare reflektierende Oberfläche umfasst; und
eine Stützstruktur (6), die ausgelegt ist, um die Faltstruktur (3) an dem elektronischen Gerät (2) derart zu befestigen, dass sich eine Brennebene der optischen Vergrößerungsvorrichtung (1) innerhalb des elektronischen Geräts (2) befindet,
wobei das Reflexionssystem mindestens teilweise nicht stationär innerhalb der Faltstruktur (3) angeordnet ist, wobei die Stützstruktur (6) mindestens einen ersten beweglichen Arm (9, 10) umfasst, der ausgelegt ist, um entweder das primäre reflektierende Element (4) oder das sekundäre reflektierende Element (5) zu tragen, wobei der bewegliche Arm (9, 10) zwischen einer Lagerposition (P1) und einer Betriebsposition (P2) beweglich ist, und
wobei der bewegliche Arm (9, 10) ein erstes Ende (9a, 10a), das drehbar gelagert mit einer Basis (6a) der Stützstruktur (6) verbunden ist, und ein zweites Ende (9b, 10b), das entweder das primäre reflektierende Element (4) oder das sekundäre reflektierende Element (5) trägt, wobei der bewegliche Arm (9, 10) ausgelegt ist, um in Richtung einer Hauptebene der Basis (6a) zu schwenken, und optional einen zusätzlichen beweglichen Arm (9, 10) umfasst.

2. Vorrichtung (1) nach Anspruch 1, wobei die Faltstruktur (3) ferner eine reale oder virtuelle Öffnung (7) umfasst, wobei elektromagnetische Strahlung über die Öffnung in die Faltstruktur (3) eintritt, und wobei das Reflexionssystem ausgelegt ist, um den gefalteten optischen Weg (O) in seiner Ausdehnung von der Öffnung (7) zu der Brennebene zu bilden.

3. Vorrichtung (1) nach Anspruch 2, wobei das sekundäre reflektierende Element (5) entlang des optischen Wegs (O) zwischen der Öffnung (7) und dem primären reflektierenden Element (4) angeordnet ist; oder
zwischen dem primären reflektierenden Element (4) und der Brennebene.

4. Vorrichtung (1) nach einem der vorhergehenden Ansprüche, wobei das Reflexionssystem ferner ein tertiäres reflektierendes Element (8) umfasst,
wobei das tertiäre reflektierende Element (8) entlang des optischen Wegs (O) zwischen dem primären reflektierenden Element (4) und der Brennebene angeordnet ist; oder
zwischen der Öffnung (7) und dem primären reflektierenden Element (4);
wobei das tertiäre reflektierende Element (8) eine planare Reflexionsfläche umfasst.

5. Vorrichtung (1) nach einem der vorhergehenden Ansprüche, wobei eine Gesamtlänge des optischen Wegs in der Ausdehnung des optischen Weg von der Brennebene bis zu demjenigen unter dem primären reflektierenden Element (4), dem sekundären reflektierenden Element (5) oder dem tertiären reflektierenden Elemente (8), das am weitesten entfernt ist, ≥ 100 mm, vorzugsweise ≥ 300 mm, ist.

6. Vorrichtung (1) nach einem der vorhergehenden Ansprüche, wobei das Reflexionssystem stationär innerhalb der Faltstruktur (3) angeordnet ist und die Stützstruktur (6) die Faltstruktur (3) umschließt.

7. Vorrichtung (1) nach Anspruch 1, wobei der bewegliche Arm (9, 10) eine Vielzahl von miteinander verbundenen Segmenten (11) umfasst, wobei die Segmente (11) derart relativ zueinander beweglich sind, dass der bewegliche Arm (9, 10) in mindestens eine Richtung ausdehnbar ist.

8. Vorrichtung (1) nach Anspruch 7, wobei die Segmente (11) verschiebbar und/oder drehbar gelagert miteinander verbunden sind.

9. Vorrichtung (1) nach einem der Ansprüche 1 oder 7 bis 8, wobei die Stützstruktur (6) einen zweiten beweglichen Arm (10) umfasst, wobei der erste bewegliche Arm (9) das primäre reflektierende Element (4) trägt und der zweite bewegliche Arm (10) das sekundäre reflektierende Element (5) trägt, wobei das primäre reflektierende Element (4) und das sekundäre reflektierende Element (5) derart angeordnet sind, dass die reflektierende Oberfläche des primären reflektierenden Elements (4) mindestens teilweise der reflektierenden Oberfläche des primären reflektierenden Elements (4) zugewandt ist, wenn der erste bewegliche Arm (9) und der zweite bewegliche Arm (10) in Betriebspositionen (P2) sind.

10. Vorrichtung (1) nach Anspruch 9, wobei der erste bewegliche Arm (9) und der zweite bewegliche Arm (10) ausgelegt sind, um übereinander gefaltet zu werden, wenn der erste bewegliche Arm (9) und der zweite bewegliche Arm (10) von der Betriebsposition (P2) in die Lagerposition (P1) bewegt werden.

11. Vorrichtung (1) nach einem der vorhergehenden Ansprüche, ferner umfassend eine Linsenanordnung (12), die entweder an das sekundäre reflektierende Element (5) oder das tertiäre reflektierende Element (8) benachbart angeordnet ist.

12. Elektronisches Gerät (2) umfassend eine Anzeige (13), ein Gehäuse (14), einen primären Bildsensor (15) und die optische Vergrößerungsvorrichtung (1) nach einem der Ansprüche 1 bis 11, wobei die optische Vergrößerungsvorrichtung (1) ausgelegt ist, um derart an dem Gehäuse (14) befestigt zu werden, dass eine Brennebene der optischen Vergrößerungsvorrichtung (1) koplanar mit dem primären Bildsensor (15) ist.

13. Elektronisches Gerät (2) nach Anspruch 12, wobei entweder das sekundäre reflektierende Element (5), das tertiäre reflektierende Element (8) oder die Linsenanordnung (12) der optischen Vergrößerungsvorrichtung (1) an den primären Bildsensor (15) benachbart angeordnet ist.

14. Elektronisches Gerät (2) nach Anspruch 12 oder 13, wobei ein Abschnitt des optischen Wegs (O), der die Brennebene erreicht, kollinear mit einer optischen Achse des primären Bildsensors (15) ist.

15. Elektronisches Gerät (2) nach einem der Ansprüche 12 bis 14, umfassend einen sekundären Bildsensor (16), aufweisend ein größeres Sichtfeld als der primäre Bildsensor (15), wobei die optische Vergrößerungsvorrichtung (1) derart angeordnet ist, dass sie eine optische Achse des sekundären Bildsensors (16) nicht verdeckt, und wobei die Anzeige (13) ein Dual-View-Display ist, das ausgelegt ist, um wahlweise gleichzeitig eine von dem primären Bildsensor (15) bereitgestellte Primäransicht (13a) und eine von dem sekundären Bildsensor (16) bereitgestellte Sekundäransicht (13b) zu zeigen.

## Revendications

1. Dispositif de grossissement optique (1) pour un appareil électronique (2), ledit dispositif comprenant :
une structure pliable (3) comprenant un système de réflexion configuré pour former un trajet optique (O) plié, ledit système de réflexion comprenant un élément réfléchissant principal (4) et un élément réfléchissant secondaire (5), ledit élément réfléchissant principal (4) comprenant une surface réfléchissante concave et ledit élément réfléchissant secondaire (5) comprenant une surface réfléchissante plane ; et
une structure de support (6) configurée pour fixer ladite structure pliante (3) audit appareil électronique (2), de telle sorte qu'un plan focal dudit dispositif de grossissement optique (1) est situé à l'intérieur dudit appareil électronique (2), dans lequel ledit système de réflexion est au moins partiellement disposé de manière non stationnaire à l'intérieur de ladite structure pliante (3), ladite structure de support (6) comprenant au moins un premier bras mobile (9, 10) configuré pour porter l'un dudit élément réfléchissant principal (4) ou dudit élément réfléchissant secondaire (5), ledit bras mobile (9, 10) étant mobile entre une position de stockage (P1) et une position opérationnelle (P2), et
dans lequel ledit bras mobile (9, 10) comprend une première extrémité (9a, 10a) connectée de manière pivotante à une base (6a) de ladite structure de support (6), et une seconde extrémité (9b, 10b) portant l'un dudit élément réfléchissant principal (4) ou dudit élément réfléchissant secondaire (5), ledit bras mobile (9, 10) étant configuré pour pivoter vers un plan principal de ladite base (6a) et, éventuellement, un bras mobile (9, 10) supplémentaire.

2. Dispositif (1) selon la revendication 1, dans lequel ladite structure pliante (3) comprend également une ouverture réelle ou virtuelle (7), le rayonnement électromagnétique entrant dans ladite structure pliante (3) par ladite ouverture, et ledit système de réflexion étant configuré pour former ledit trajet optique (O) plié lorsqu'il se prolonge de ladite ouverture (7) audit plan focal.

3. Dispositif (1) selon la revendication 2, dans lequel ledit élément réfléchissant secondaire (5) est disposé, le long dudit trajet optique (O), entre ladite ouverture (7) et ledit élément réfléchissant principal (4) ; ou
entre ledit élément réfléchissant principal (4) et ledit plan focal.

4. Dispositif (1) selon l'une quelconque des revendications précédentes, dans lequel ledit système de réflexion comprend également un élément réfléchissant tertiaire (8),
ledit élément réfléchissant tertiaire (8) étant disposé, le long dudit trajet optique (O), entre ledit élément réfléchissant principal (4) et ledit plan focal ; ou
entre ladite ouverture (7) et ledit élément réfléchissant principal (4) ;
ledit élément réfléchissant tertiaire (8) comprenant un réfléchissant planaire.

5. Dispositif (1) selon l'une quelconque des revendications précédentes, dans lequel une longueur totale dudit trajet optique, tel que ledit trajet optique se prolonge dudit plan focal audit élément réfléchissant principal (4), audit élément réfléchissant secondaire (5) et audit élément réfléchissant tertiaire (8) le plus éloigné, est ≥ 100 mm, de préférence ≥ 300 mm.

6. Dispositif (1) selon l'une quelconque des revendications précédentes, dans lequel ledit système de réflexion est disposé de manière stationnaire à l'intérieur de ladite structure pliante (3), et ladite structure de support (6) entoure ladite structure pliante (3).

7. Dispositif (1) selon la revendication 1, dans lequel ledit bras mobile (9, 10) comprend une pluralité de segments interconnectés (11), lesdits segments (11) étant mobiles les uns par rapport aux autres de telle sorte que ledit bras mobile (9, 10) peut se prolonger dans au moins une direction.

8. Dispositif (1) selon la revendication 7, dans lequel lesdits segments (11) sont interconnectés de manière coulissante et/ou pivotante.

9. Dispositif (1) selon l'une quelconque des revendications 1 ou 7 et 8, dans lequel ladite structure de support (6) comprend un second bras mobile (10), ledit premier bras mobile (9) portant ledit élément réfléchissant principal (4) et ledit second bras mobile (10) portant ledit élément réfléchissant secondaire (5), ledit élément réfléchissant principal (4) et ledit élément réfléchissant secondaire (5) étant disposés de telle sorte que ladite surface réfléchissante dudit élément réfléchissant principal (4) est au moins partiellement en face de ladite surface réfléchissante dudit élément réfléchissant principal (4) lorsque ledit premier bras mobile (9) et ledit second bras mobile (10) sont dans des positions opérationnelles (P2).

10. Dispositif (1) selon la revendication 9, dans lequel ledit premier bras mobile (9) et ledit second bras mobile (10) sont configurés pour se replier l'un sur l'autre lorsque ledit premier bras mobile (9) et ledit second bras mobile (10) sont déplacés de ladite position opérationnelle (P2) à ladite position de stockage (P1).

11. Dispositif (1) selon l'une quelconque des revendications précédentes, comprenant également une disposition de lentilles (12) disposée à proximité de l'un dudit élément réfléchissant secondaire (5) et dudit élément réfléchissant tertiaire (8).

12. Appareil électronique (2) comprenant un affichage (13), un boîtier (14), un capteur d'image principal (15), et le dispositif de grossissement optique (1) selon l'une quelconque des revendications 1 à 11, dans lequel ledit dispositif de grossissement optique (1) est configuré pour se fixer audit boîtier (14) de telle sorte qu'un plan focal dudit dispositif de grossissement optique (1) est coplanaire avec ledit capteur d'image principal (15).

13. Appareil électronique (2) selon la revendication 12, dans lequel l'un de l'élément réfléchissant secondaire (5), de l'élément réfléchissant tertiaire (8), et de la disposition de lentilles (12) dudit dispositif de grossissement optique (1) est disposé à proximité dudit capteur d'image principal (15).

14. Appareil électronique (2) selon la revendication 12 ou 13, dans lequel une section du trajet optique (O) qui atteint ledit plan focal est colinéaire avec un axe optique dudit capteur d'image principal (15).

15. Appareil électronique (2) selon l'une quelconque des revendications 12 à 14, comprenant un capteur d'image secondaire (16) ayant un champ de vision plus large que ledit capteur d'image principal (15), ledit dispositif de grossissement optique (1) étant agencé de telle sorte qu'il n'obscurcit pas un axe optique dudit capteur d'image secondaire (16), et ledit affichage (13) étant un affichage à double vue configuré pour afficher, éventuellement simultanément, une vue principale (13a) fournie par ledit capteur d'image principal (15) et une vue secondaire (13b) fournie par ledit capteur d'image secondaire (16) .
